# EUROPEAN PATENT APPLICATION

(11) **EP 4 480 894 A1**
(43) Date of publication of application: **25.12.2024**
(21) Application number: 23180424.6
(22) Date of filing: 20.06.2023
(51) Int. Cl.: B67C 3/00, B67C 3/02, B67C 7/00, B65B 21/12, B65B 43/46, B65B 55/24, B65B 57/06, B65B 65/00, B65B 65/02, G07F 13/06, G07F 13/10

(54) **BOTTLE FILLING APPARATUS AND METHOD**

(71) Applicant: Riprup Company S.A., GY1 St. Peter Port (GG)
(72) Inventor: Schucker, Josef, 6622 Ronco Sopra Ascona (CH)
(74) Representative: Wittmann, Günther

(57) **Abstract**

The present invention discloses a bottle filling apparatus adapted to fill a beverage bottle that is to be positioned in a one multiple bottle container of the first group of multiple bottle containers configured that a plurality of beverage bottles may be positioned therein, wherein the bottle filling apparatus comprises
- a beverage dispensing device adapted to output a plurality of different beverage types from a nozzle into a beverage bottle that is to be positioned in the multiple bottle container;
- a bottle handling device adapted to position the beverage bottle at the nozzle of the beverage dispensing device and to position the beverage bottle in the multiple bottle container; and
- a filler controller adapted
- to instruct the beverage dispensing device to output a first beverage type into the beverage bottle, wherein the first beverage type is made according to a first beverage recipe; and
- to instruct the bottle handling device to position the at least one beverage bottle in the one multiple bottle container of the first group of multiple bottle containers.

## Description

### Field of the Invention

The present invention relates to a bottle filling apparatus and method that is configured to clean and fill beverage bottles close to the point of use with beverage.

### Description of the related Art

The present invention intends to avoid use of plastic bottles for beverage, particularly to avoid use of one-way plastic bottles for beverage. The present invention also intends to avoid transport of beverage bottles.

Currently, it is common to buy beverage in plastic bottles, which are discarded after use leading to a serious environmental pollution. Further, the beverage has to be transported by a lorry from a filling plant to a shop or to the consumer. In some countries glass bottles may be returned against deposit however, also the empty bottles have to be transported by a lorry or by ships for hundreds and thousands of kilometers.

The present invention relates to a bottle filling apparatus that combines beverage bottle cleaner and a beverage dispenser. The bottle filling apparatus shall be located at the point of use as close as possible. Further, the beverage dispenser of the bottle filling apparatus shall provide customized beverage for covering local demand.

### Summary of the Invention

It is an object of the present invention to provide an apparatus and a method for filling beverage into a plurality of beverage bottles close to the point of use to reduce environmental impact by transport of beverage bottles over a large distance.

The object is achieved by a method according to claim 1, a bottle filling apparatus according to claim 6 or 10 and a multiple bottle container according to claim 20.

The invention discloses a method of filling a beverage in a plurality of beverage bottles comprising the step of assessing at least one property of a multiple bottle container configured that a plurality of beverage bottles may be positioned therein. The at least one property of the beverage container corresponds to a first beverage recipe. The method also comprises the step of filling a first beverage type depending on the at least one property of the multiple bottle container into the at least one beverage bottle that is positioned in the multiple bottle container after filling the at least one beverage bottle, wherein the first beverage type is made by the first beverage recipe. The multiple bottle container may be a box or crate, in which a plurality of beverage bottles may be positioned, wherein each bottle is positioned in a separate guide of the multiple bottle container. The at least one beverage bottle may have been positioned in the multiple beverage container during execution of the step of assessing at least one property of the multiple bottle container. The multiple bottle container may be a bottle crate. The beverage type may indicate the beverage recipe of the beverage that has to be filled into the bottle.

The method according to the present invention has the advantage that an individualized beverage may be filled into a bottle that has to be positioned into a particular multiple bottle container close to the point of use.

The method according to the present invention may comprise the step of assessing at least one property of the multiple bottle container, wherein the at least one property of the beverage container corresponds to a second beverage. The method also comprises the step of filling a second beverage type depending on the at least one property of the multiple bottle container into at least one beverage bottle that is positioned in the multiple beverage container after filling the at least one beverage bottle, wherein the second beverage type is made by the second beverage recipe.

The inventive method has the advantage that depending on the property of the first group of multiple bottle containers all bottles positioned in the first group of multiple bottle containers are prepared by the first beverage recipe, and all bottles to be positioned in the second group of multiple bottle containers are prepared by the second beverage recipe. Thereby, individualized beverage can be provided close to the point of use.

The first group of multiple beverage containers may comprise at least one multiple beverage container, and the second group of multiple beverage containers may comprise at least one multiple beverage container.

The at least one property of the multiple bottle container may comprise data indicating, which beverage is to be filled or is filled in the beverage bottle for each beverage bottle, wherein in at least one beverage bottle the first beverage type made by the first beverage recipe is to be filled or is filled and wherein in at least one beverage bottle the second beverage type made by the second beverage recipe is to be filled or is filled. Thereby, the beverage bottles in one multiple beverage container can be filled with at least two types of (different) beverages.

The step of assessing at least one property of the multiple bottle container may comprise the step of reading a RFID tag positioned on the multiple bottle container, wherein the RFID tag comprises a memory. The memory may comprise data associated to the beverage recipe to be used for producing the beverage that is to be filled into the beverage bottle that is placed into the multiple bottle container. The data is stored in the memory of the RFID tag may be associated to the first or second beverage recipe.

In one embodiment, the at least one beverage bottle was positioned in the multiple bottle container during execution of the step of assessing at least one property of the multiple bottle container.

In another embodiment of the invention the method may include the step of removing the at least one beverage bottle from the multiple bottle container before the step of filling the first beverage type or the second beverage type into the at least one beverage bottle.

The method according to the present invention may comprise the step of removing at least one beverage bottle from the multiple bottle container and to execute the step of cleaning at least the interior of the at least one beverage bottle removed from the multiple bottle container before executing the step of filling the first beverage type or second beverage type depending on at least one property of the bottle container into the at least one beverage bottle that was removed from the multiple bottle container. After the step of filling the first beverage type or the second beverage type depending on the at least one property of the multiple bottle container into the at least one beverage bottle that was removed from the multiple bottle container, the method may execute the step of positioning the at least one beverage bottle filled with the first or second beverage type into the multiple bottle container.

The step of positioning the at least one beverage bottle filled with the beverage into the multiple bottle container may include the step of positioning the at least one beverage bottle in the multiple beverage container, from which it was removed by the step of removing at least one beverage bottle from the multiple bottle container.

In one embodiment, the method may execute the step of filling the at least one beverage bottle with the first beverage type according to the first beverage recipe or by filling with the second beverage type according to the second beverage recipe simultaneous the with the step of cleaning the interior of at least one beverage bottle removed from the multiple bottle container after the at least one beverage bottle removed from the multiple bottle container that is filled.

The present invention also relates to a computer program product that is adapted to execute the steps of the above described method, if loaded into a processor of a computer having a memory.

The invention also discloses in a first embodiment a bottle filling apparatus adapted to fill a beverage bottle that is to be positioned in a multiple bottle container configured that a plurality of beverage bottles may be positioned therein. The bottle filling apparatus comprises a beverage dispensing device adapted to output a plurality of different beverage types from a nozzle into a beverage bottle that is to be positioned in the multiple bottle container. The bottle filling apparatus further comprises a bottle handling device adapted to position the beverage bottle at the nozzle of the beverage dispensing device and to position the beverage bottle in the multiple bottle container. The bottle handling device may be adapted to position a plurality of beverage bottles at a plurality of nozzles of the beverage dispensing device, wherein each beverage bottle is positioned at a different nozzle of the beverage dispensing device. The bottle handling device may also be adapted to position a plurality of beverage bottles in the multiple bottle container. The bottle filling apparatus may comprise a filler controller adapted to receive data indicated of a beverage recipe, to instruct the beverage dispensing apparatus to output a first beverage type into the beverage bottle, wherein the first beverage type is made according to the first beverage recipe, and to instruct the bottle handling device to position the at least one beverage bottle in the one multiple bottle container of the first group of multiple bottle containers.

The filler controller may further be adapted to receive data indicative of a second beverage recipe, to instruct the beverage dispensing device to output a second beverage type into the beverage bottle, wherein the second beverage type is made according to the second beverage recipe, and to instruct the bottle handling device to position the at least one beverage bottle in one multiple bottle container of the second group of multiple bottle containers.

The bottle filling apparatus further comprises a scanning device adapted to assess at least one property of the multiple bottle container, wherein the at least one property of the beverage container corresponds to a first beverage recipe. The filler controller is adapted to instruct the scanning device to assess at least one property of one multiple bottle container of the first group of multiple bottle containers and to transmit data indicative of the first beverage recipe to the filler controller, and/or to instruct the scanning device to assess at least one property of a one multiple bottle container of the second group of multiple bottle containers and to transmit data indicated of the second beverage recipe to the filler controller.

The multiple bottle container may be configured that a plurality of beverage bottles may be positioned therein and comprises a container casing having a plurality of guides, wherein each guide is configured to accommodate at least one beverage bottle. The multiple bottle container may comprise a container RF receiver adapted to receive a radio signal. The multiple bottle container may comprise a container memory, in which beverage recipe data is stored that is associated to a beverage recipe that defines, which type of beverage is filled or is to be filled into a beverage bottle positioned or to be positioned in a guide of the multiple bottle container. The multiple bottle container further comprises a container RF transmitter adapted to transmit a radio signal. The multiple bottle container further comprises a container controller adapted to read the beverage recipe data from the memory, if the container RF receiver receives a radio signal requesting to transmit the beverage recipe data and adapted to instruct the container RF transmitter to transmit the beverage recipe data. In this embodiment the scanning device may be a RFID scanner.

Depending on the at least one property of the multiple bottle container and individualized beverage is filled into the bottle that are positioned thereafter in the respective multiple bottle container.

The bottle filling apparatus may further comprise a bottle cleaning device adapted to clean at least the interior of at least one beverage bottle. The filler controller is adapted to instruct the bottle handling device to remove at least one beverage bottle from the multiple bottle container and to position the at least one beverage bottle such at the bottle cleaning device that it can be cleaned by the bottle cleaning device. Thereafter, the filler controller instructs the bottle cleaning device to clean at least the interior of the at least one beverage bottle. Thereafter, the filling controller instructs the bottle handling device to move the at least one beverage bottle to the beverage dispensing device, and instructs the beverage dispensing device to output a first beverage type or a second beverage type into the at least one beverage bottle.

The bottle cleaning device may comprise a first swivel element having a beverage bottle cleaning nozzle and a second swivel element connected to the first swivel element by a first hinge element. A first end of a beverage bottle cleaning conduit is connected to the beverage bottle cleaning nozzle. An actuation means is configured for pivoting the first swivel element with respect to the second swivel element. The second end of the beverage bottle cleaning conduit is in fluid communication with the source of pressurized cleaning liquid in a cleaning status of the bottle cleaning device.

A first cleaning drive may be coupled to the second swivel element and configured to rotate the first swivel element around a longitudinal axis of the beverage bottle to be cleaned. A second cleaning drive may be coupled to the second swivel element and configured to move the second swivel element along the longitudinal axis of the beverage bottle to be cleaned.

Since the first swivel element can be pivoted with respect to the second swivel element any shape of beverage bottle can be effectively cleaned. Further, the beverage bottle cleaning nozzle can be positioned close to the interior walls of a beverage bottle, such as the interior of the side wall, the interior of the bottom wall and the interior of the shoulder wall. Since the beverage bottle cleaning nozzle is positioned close to the interior wall of the beverage bottle, the pressurized cleaning liquid impinges under a higher pressure on the interior wall of the beverage bottle.

The bottle cleaning device may also dry the interior of the beverage bottle. A first end of a beverage bottle drying conduit may be in fluid communication with the beverage bottle cleaning nozzle. The second and of the beverage bottle drying conduit may be in fluid communication with a source of a pressurized gas in a drying status of the beverage bottle cleaning apparatus. The bottle cleaning device performs a washing operation in its cleaning status, and the bottle cleaning device performs a drying operation in its drying status.

A bottle cleaning device is described in more detail in the European patent application EP23168779.9, which is hereby incorporated in this disclosure by reference in its entirety.

The bottle filling apparatus can remove at least one beverage bottle from the multiple bottle container, clean at least the interior of the at least one beverage bottle and fill the at least one beverage bottle with the desired beverage as indicated by the at least one property of the multiple bottle container. This can be achieved close to the point of use, since the bottle filling apparatus according to the present invention has a small footprint and requires only a little amount of space for installation.

The present invention also discloses in a second embodiment a bottle filling apparatus adapted to fill a beverage bottle that is to be positioned in one multiple bottle container of a first group of multiple bottle containers configured that a plurality of beverage bottles may be positioned therein. The bottle filling apparatus comprises a beverage dispensing device adapted to output at least one beverage type from a nozzle into a beverage bottle that is to be positioned in one multiple bottle container of the first group of multiple bottle containers. The bottle filling apparatus comprises a beverage dispensing device adapted to output at least one beverage type from a nozzle into a beverage bottle that is to be positioned in one multiple bottle container of the first group of multiple bottle containers. The bottle filling apparatus comprises a bottle cleaning device adapted to clean at least the interior of at least one beverage bottle. The bottle filling apparatus further comprises a bottle handling device adapted to position the beverage bottle at the nozzle of the beverage dispensing device and to position the beverage bottle in the multiple bottle container. The bottle filling apparatus comprises a filler controller adapted to instruct the bottle handling device to remove at least one bottle from one multiple bottle container of the first group of multiple bottle containers and to position the at least one beverage bottle such at the bottle cleaning device that the bottle cleaning device can clean the at least one beverage bottle. Thereafter, the filler controller instructs the bottle cleaning device to clean at least the interior of the at least one beverage bottle. Thereafter, the bottle cleaning device instructs the bottle handling device to move the at least one beverage bottle to the beverage dispensing device. Then, the filler controller instructs the beverage dispensing device to output the at least one beverage type into the beverage bottle, wherein the first beverage type is made according to the first beverage recipe. The filler controller instructs the bottle handling device to position the at least one beverage bottle in one multiple bottle container of the first group of multiple bottle containers.

The first group of multiple bottle containers may comprise one multiple bottle container or a plurality of multiple bottle container, in which the same arrangement of different beverage types are filled into the beverage bottles. It is possible that the same type of beverage is filled in all beverage bottles of one beverage bottle arrangements.

If the first group of multiple bottle containers comprises only one multiple bottle container, the beverage bottle is positioned after filling in the same multiple bottle container from which it was removed. If the first group of multiple bottle containers comprises more than one multiple bottle container, the beverage bottle may be positioned after filling into a multiple bottle container of the same group, from which the beverage bottle was not removed. Alternatively, if the first group of multiple bottle containers comprises more than one multiple bottle container, the beverage bottle may be positioned after filling into a multiple bottle container, from which the beverage bottle was removed.

The present invention has the advantage, that beverage bottles may be filled by the desired beverage recipe close to the point of use, reducing the environmental impact of transport and reducing delivery times.

The bottle filling apparatus may comprise a lid cleaning device adapted to clean a lid that has been removed from the beverage bottle before cleaning one of the beverage bottles and that is fixed on one of the beverage bottles after filling the beverage bottle. The filler controller may be adapted to instruct the bottle handling device to move the lid from the beverage bottle to be cleaned to the lid cleaning device, to instruct the lid cleaning device to clean the lid and to move the lid from the lid cleaning device to the beverage bottle after filling the beverage bottle.

This allows to reuse the lid, reducing environmental impact of the beverage consumption.

The lid may be fixed on the bottle from which it was removed or on another bottle.

The bottle handling device may comprise a first gantry having at least one beverage bottle gripper configured to grip one of the beverage bottles and a second gantry mechanically coupled to the first gantry and having at least one lid gripper configured to grip a lid of the beverage bottles. Thereby, the beverage bottle and the lid of the beverage bottle can be handled independently. In one embodiment, the first gantry and the second gantry are guided by a guide such that the first gantry and the second gantry move linearly.

The first gantry and the second gantry are connected to a first drive and moved synchronically. The filler controller may be adapted to instruct the first drive to move the first gantry, in which the bottle gripper is located over one beverage bottle in the multiple beverage container, to instruct a second drive to lower the bottle gripper, to instruct the bottle gripper to grip one of the beverage bottles, to instruct the second drive to lift the bottle gripper, to instruct the first drive to move the at least one beverage bottle to a portion of a clamping device located in a handling region of the beverage bottle apparatus and to instruct the clamping device to clamp the at least one beverage bottle located in the handling region of the bottle filling apparatus.

The filler controller is further adapted to instruct the first drive coupled to the second gantry to position the lid gripper over the at least one beverage bottle clamped by the clamping device and located in the handling region of the bottle filling apparatus, to instruct a third drive to lower the lid gripper to the inlet of the at least one beverage bottle clamped by the clamping device and located in the handling region of the bottle filling apparatus, to instruct the lid gripper to remove the lid from the at least one beverage bottle clamped by the clamping device and located in the handling region of the bottle filling apparatus, to instruct the third drive to lift the lid gripper and to instruct the first drive to position the lid gripper over the lid cleaning device.

The lid cleaning device may comprise a first lid cleaning swivel element having a lid cleaning nozzle and a second lid cleaning swivel element connected to the first swivel element by a first hinge element. A first end of a lid cleaning conduit is connected to the lid cleaning nozzle. An actuation means is configured for pivoting the first lid cleaning swivel element with respect to the second lid cleaning swivel element.

A first lid cleaning drive is coupled to the second lid cleaning swivel element and configured to rotate the first lid cleaning swivel element around a longitudinal axis of the lid to be cleaned. A second lid cleaning drive is coupled to the second lid cleaning swivel element and configured to move the second swivel element along the longitudinal axis of the lid to be cleaned. The second end of the lid cleaning conduit is in fluid communication with the source of pressurized cleaning liquid in a cleaning status of the lid cleaning device. The lid cleaning device may be embodied as described above with respect to the bottle cleaning apparatus. The lid cleaning device may dry the lid by pressurized gas emitted by the lid cleaning nozzle. A lid cleaning device is described in more detail in the European patent application EP23168779.9, which is hereby incorporated in this disclosure by reference in its entirety.

Since the lid is cleaned it can be reused, reducing the environmental impact of beverage consumption.

The bottle handling device may comprise a flip device adapted to flip the portion of the clamping device located in the handling region. The filler controller may be adapted to instruct the flip device to flip the clamping device and the at least one beverage bottle clamped therein in the handling region of the bottle filling apparatus such that the opening of the at least one beverage bottle is directed downwards. The filler controller is further adapted to instruct the bottle cleaning device to clean at least the interior of the at least one beverage bottle.

The bottle handling device may comprise a swing device adapted to swing the portion of the clamping device located in the handling region to the dispensing region of the bottle filling apparatus, in which the opening of the at least one beverage bottle clamped by the clamping device is positioned below the nozzle of the beverage dispensing device. The flip device may flip the at least one beverage bottle clamped by the clamping device such that the opening of the at least one beverage bottle is directed upwards before, during and/or after the swing device swings the portion of the clamping device located in the handling region of the bottle filling apparatus to the dispensing region of the bottle filling apparatus.

The filler controller is adapted to instruct the swing device to swing the portion of the clamping device located in the handling region to the dispensing region, in which the opening of the at least one beverage bottle clamped by the clamping device is positioned below the nozzle of the beverage dispensing device. Thereafter the filler controller instructs the beverage dispensing device to output a first beverage type or a second beverage type into the beverage bottle.

The bottle cleaning device and the beverage dispensing device are located at different positions such that beverage bottles may be cleaned and filled in parallel.

The filler controller may be adapted to instruct the bottle cleaning device to clean at least the interior of the at least one beverage bottle that was removed by the bottle gripper of the first gantry from the multiple bottle container after the at least one beverage bottle that is filled by the beverage dispensing device.

The bottle filling apparatus according to the second embodiment may comprise a scanning device adapted to assess at least one property of the multiple bottle container, wherein the at least one property of the multiple beverage container corresponds to a first beverage recipe or a second beverage recipe. The filler controller may be adapted to instruct the scanning device to assess the at least one property of a first multiple bottle container and to transmit data indicating the first beverage recipe to the filler controller and/or to instruct the scanning device to assess the at least one property of a second multiple bottle container and to transmit data indicating the second beverage recipe to the filler controller.

The beverage dispensing device may comprise a filter having an inlet connected to a source of aqueous liquid and a filter outlet. The beverage dispensing device may comprise a carbonization device having an inlet coupled with the filter outlet, an outlet coupled with the nozzle and/or a mineralization device having an inlet coupled with the filter outlet and an outlet coupled with the nozzle and/or an aroma dispensing device having an inlet coupled with the filter outlet and an outlet coupled with the nozzle. The filler controller may be adapted to control operation of the carbonizing device and/or the mineralization device and/or the aroma dispensing device according to the first beverage recipe or the second beverage recipe. The filter may be a reverse osmosis filter and the tilter outlet may be a permeate outlet.

The beverage dispensing device may further comprise a tempering device having an inlet coupled with the first outlet and an outlet coupled with the nozzle to temper the beverage to the desired temperature. The tempering device may be suitable for bottle filling apparatus installed in a hotel, hospital, nursing home or the like, since the beverage bottle can be delivered to the consumer without prior tempering.

The aqueous liquid may pass the carbonization device, the mineralization device, the aroma dispensing device and/or the tempering device in an arbitrary order, wherein the flow rate of the acquires liquid is constant as it passes the carbonization device and/or the mineralization device, the aroma dispensing device and/or the tempering device. The constant flow rate avoids germ formation in tanks, which are avoided according to the present invention.

The bottle filling apparatus may comprise a sealing device. The sealing device comprises a printing device adapted to print data representing the first beverage recipe or the second beverage recipe filled into the beverage bottle on a seal. A seal handling device is adapted to position the seal at least partially around a neck of the beverage bottle and at least partially around the lid positioned on the bottle mouth. The sealing device further comprises a heating device adapted to heat the seal positioned at least partially around the neck of the bottle and at least partially around the lid positioned on the bottle mouth.

The heating device may be an infrared heater or a blower expelling heated air.

The seal may be a tubular seal after being heated by the heating device that partially extends along the neck of the beverage bottle and the lid positioned on the bottle mouth of the beverage bottle. The filler controller is adapted to control the printing device such that it prints graphical data depending on the first beverage recipe or the second beverage recipe. The graphical data may represent properties of the beverage filled into the beverage bottle such as type of beverage, aroma of the beverage, carbonization of the beverage, mineralization of the beverage and/or expiry date of the beverage.

All of the above described features of the bottle filling device may apply to the first and second embodiment of the bottle filling device, if not explicitly restricted to one embodiment.

The present invention also discloses a multiple bottle container configured that a plurality of beverage bottles may be positioned therein and comprises a container casing having a plurality of guides, wherein each guide is configured to accommodate at least one beverage bottle. The multiple bottle container may comprise a container outlet receiver adapted to receive a radio signal. The multiple bottle container may comprise a container memory, in which beverage recipe data is stored that is associated to a beverage recipe that defines, which type of beverage is filled or is to be filled into a beverage bottle positioned or to be positioned in a guide of the multiple bottle container. The multiple bottle container further comprises a container RF transmitter adapted to transmit a radio signal. The multiple bottle container further comprises a container controller adapted to read the beverage recipe data from the memory, if the container RF receiver receives a radio signal requesting to transmit the beverage recipe data and adapted to instruct the container RF transmitter to transmit the beverage recipe data.

The beverage recipe data may comprise values indicating concentration and/or amounts of the ingredients to be added to the aqueous liquid and/or carbonization data and/or desired temperature. The beverage data may also comprise a reference to the desired concentration data for ingredients to be supplied to the aqueous liquid and/or desired carbonization of the acquires liquid and/or desired temperature of the acquires liquid.

The multiple bottle container may further comprise a display element on which data can be displayed indicating the first beverage recipe or the second beverage recipe. The container RF receiver, the container memory and the container RF transmitter may be embodied by an RFID element.

### Brief Description of the Drawings

The invention is now described in further detail by exemplary and not limiting embodiments with reference to the accompanying figures, wherein
Figure 1 is a schematic diagram of a beverage dispenser and a beverage bottle;
Figures 2 to 11 are schematic views showing different steps during cleaning and filling beverage bottles of a multiple bottle container; and
Figure 12 shows an apparatus for applying a seal on a neck and a lid of the beverage bottle.

### Detailed Description of the Drawings

The invention is now explained in further detail with reference to the attached drawings. None of the drawings is drawn to scale. The present disclosure should in no way be limited to the exemplary implementations and techniques illustrated in the drawings and described below. As used in the description herein and throughout the claims, the following terms take the meanings explicitly associated herein, unless the context clearly dictates otherwise: the meaning of "a", "an" and "the" includes a plural reference, the meaning of "in" includes "in" and "on." Spatial relationships like "above", "blow" or the like are not to be interpreted limiting.

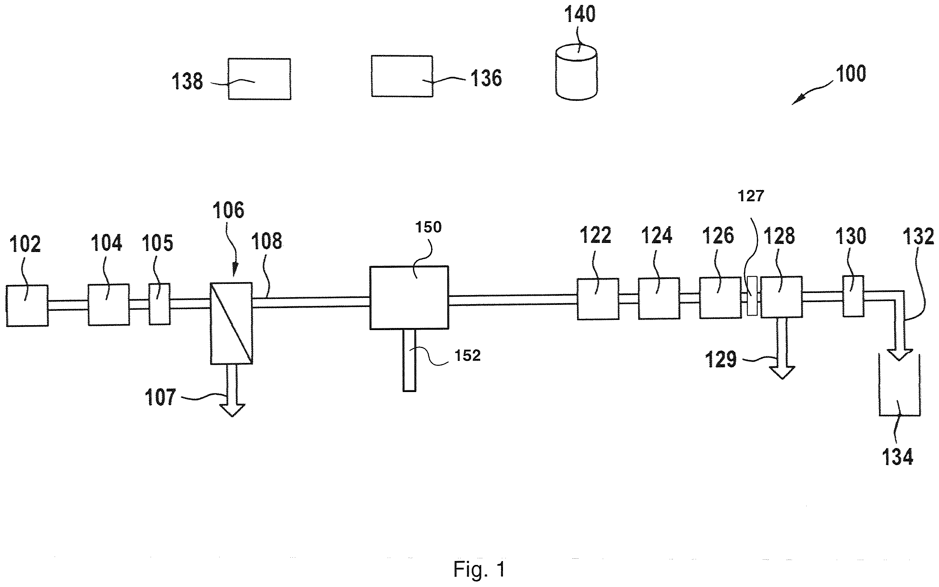

Reference is made to figure 1 showing a beverage dispenser 100 according to the present invention. The beverage dispensing device 100 is connected to a water source 102 that may be tap water or a tank.

The water source 102 is connected by a conduit with a pre-filter 104 which may comprise a sediment filter and/or an activated carbon filter.

The pre-filter 104 is connected to a reverse osmosis filter 106 acting as a demineralization device. The water drawn from the water source 102 is pressurized by a pump 105 before entering the reverse osmosis filter. Operation of a reverse osmosis filter 106 is known to the person skilled in the art, and therefore operation of the reverse osmosis filter 106 does not have to be explained in further detail. The concentrate, in which the undesired components, such as minerals, heavy metals or the like are solved, as well as filtered microorganisms and bacteria are output to a drain 107.

The water (permeate) output by the reverse osmosis filter 106 is fed by a conduit 108 and a three-way valve 150 to a flow-type tempering device 122 forming a beverage preparation device. The flow-type tempering device 122 is tempering the water to a temperature set by a dispenser controller 136. The set temperature of the water to be output by the flow-type tempering device 122 is commanded by the dispenser controller 136. The water flows from an output of the flow-type tempering device 122 to the input of a flow-type carbonization device 124 adding carbon dioxide to the water as instructed by the dispenser controller 136.

From an output of the flow-type carbonization device 124 forming also a beverage preparation device, the water flows to a flow-type mineralization device 126 also forming a beverage preparation device. Then, the water may flow to an optional aroma dispensing device 127 also forming a beverage preparation device. The aroma dispensing device 127 may supply any ingredient having flavor into the beverage. The dispenser controller 136 controls the mineralization device 126 such that the water output by the flow-type mineralization device comprises the minerals desired by a user. The flow-type mineralization device 126 may comprise a plurality of vessels filled with mineralization fluid, wherein a plurality of micro metering pumps delivers the mineralization fluids in the respective desired quantity into the water flowing through an input of the flow-type mineralization device 126 to an output of the flow-type mineralization device 126. Such flow-type mineralization device is for example disclosed in the European patent application EP 3 489 200 A1, which is incorporated herein in its entirety by reference. The water flows from the output of the flow-type mineralization device 126 to an outlet valve 128 and passes through a retrograde contamination prevention device 130, such as a UV light source, before it is output by a nozzle 132 to a beverage bottle 134. The beverage bottle 134 may be made of glass, metal or plastic. The beverage bottle may have a volume from approximately 0,25 1 to approximately 1 l.

The aroma dispensing device 127 may dispense any aroma or aroma mixture into the water. Aroma dispensing devices are known to the person skilled in the art and therefore the aroma dispensing device does not have to be explained in further detail.

The beverage dispenser 100 allows production of individualized water at the point of use without the environmental impact of one-way plastic bottles or transport efforts of glass bottles.

All components of conduits the flow-type tempering device 122, the flow-type carbonization device 124, the flow-type mineralization device 126, the outlet valve 128, the retrograde contamination prevention device 130 and the dispensing arrangement (nozzle) 132 are made of metal and/or glass that is biological inert. Also, the output port for permeate of the reverse osmosis filter 106 is made of biological inert material, particularly a biological inert metal. The biological inert metal may comprise stainless steel, VA steel, VA1 steel, VA2 steel, VA3 steel, VA4 steel or the like. A biological inert material is a material that does not serve as nutrition for germs, microorganisms, a biological film, bacteria, virus or the like. Germs cannot form on biological inert metal contrary to plastics. Thereby, germ formation and deposition of biological films are prevented.

In the beverage dispensing operation mode, the controller controls the pump 105 after a request of a user to dispense beverage such that in all beverage preparation devices 122, 124, 126 an equal flow rate is achieved.

The beverage dispenser according to the present invention further comprises an input interface 138, by which the type of beverage and/or parameters of the beverage and/or beverage recipe to be dispensed is received. The parameters of the beverage to be dispensed may comprise the temperature of the beverage, the carbonization of the beverage, the mineralization of the beverage, any type of flavoring agents or the like. The parameters may be individually selectable by a user or may be determined by predefined recipes or types of beverage displayed on a display of a multiple beverage container.

During a period, in which no beverage is dispensed small volumes of water may stagnate in a water preparation device 122, 124, 126 and in a conduit downstream of the permeate outlet of the reverse osmosis filter 106. In such small volumes of stagnating water germs may form. For avoiding output of stagnating water and potentially germs into the beverage bottle 134 the dispenser controller 136 switches the outlet valve 128 in a position such that water is output to a drain 129 before outputting water by the nozzle 132 into the beverage bottle 134 for commencing a beverage dispenser cleaning function. Then, the dispenser controller 136 instructs the pump 105 to pump water from the water source 102 through the reverse osmosis filter 106 into the conduit 108 and the beverage preparation devices 122, 124 and 126 to the outlet valve 128. The outlet valve 128 passes the permeate to the drain 129, whereby any water stagnating in the beverage preparation devices 122, 124, 126 and the conduit 108 is flushed to the drain 129. By this procedure output of germs into the beverage bottle 134 may be avoided.

During dispensing operation, the T-valve 150 is switched such that permeate is passed from the reverse osmosis filter 106 to the flow-type tempering device 122.

During washing operation of the below described or bottle cleaning device permeate is passed from the reverse osmosis filter 106 to the permeate conduit 152.

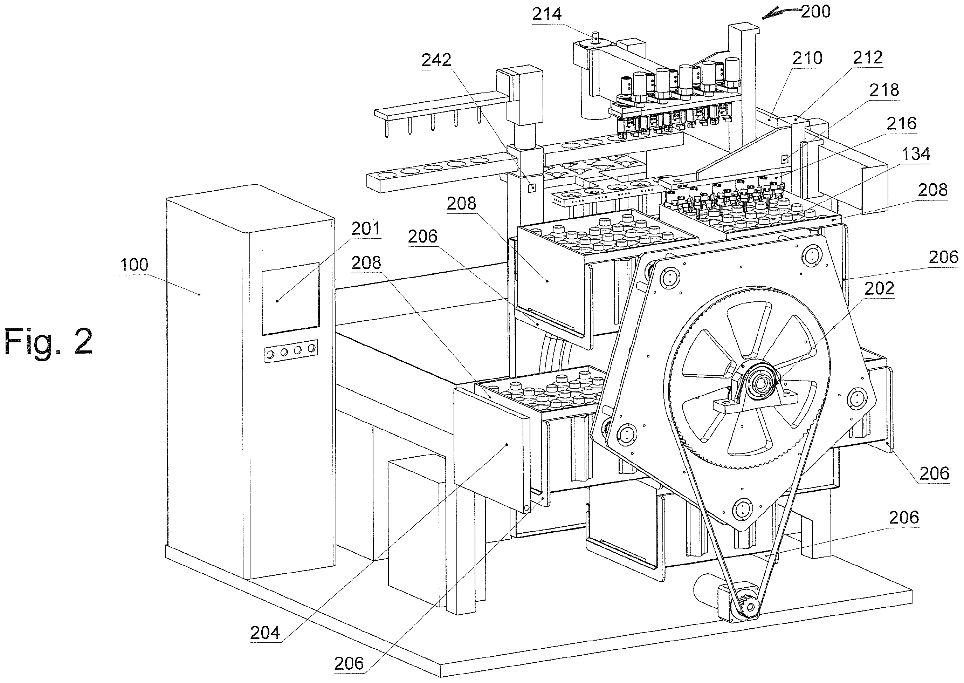

Reference is made to figure 2 showing a bottle filling apparatus 200 comprising a rotatory lift device 202 with a plurality of supports 206. In one embodiment the rotatory lift device may be a Paternoster lift. A multiple bottle container 208 may be pushed on the support 206 through a flap 204 that can be opened. The flap may be hinged at a housing (not shown) arranged around the a bottle filling apparatus 200. A plurality of beverage bottles 134 are arranged in the multiple bottle container 208. The rotatory lift device 202 can move the multiple bottle container 208 under control of the filler controller 201 from a position the next to the flap 204 to a position, where the beverage bottle 134 can be gripped by a bottle gripper 216 arranged on a first gantry 212, which is supported by a linear guide 210, wherein the first gantry 212 is driven by a first drive 214 under control of the filler controller 201. On the first gantry 212 a plurality of bottle gripper 216 are arranged, namely five bottle grippers 216. The plurality of bottle grippers 216 are driven by a second drive 218.

Figure 2 shows the first gantry 212 in a position, in which the first gantry is positioned under control of the filler controller 201 over a row formed by a plurality of beverage bottles 134 arranged in the multiple bottle container 208. The bottle grippers 216 are lowered by the second drive 218 for gripping the plurality of beverage bottles 134.

Therefore, the first gantry has moved such that the beverage bottles 134 are positioned over the clamping device 222 in the handling region 220 and lowered bottle grippers 216 until the beverage bottles 134 are positioned in the clamping device 222 under control of the filler controller 201. Thereafter, the first gantry and a second gantry 226 have moved to a position in which at least one lid gripper 228 mounted on the second gantry 226 is positioned over a lid 135 of the beverage bottle 134. In the embodiment shown in the figures, a plurality of lid grippers 228 are mounted on the second gantry 226, namely five lid grippers 228.

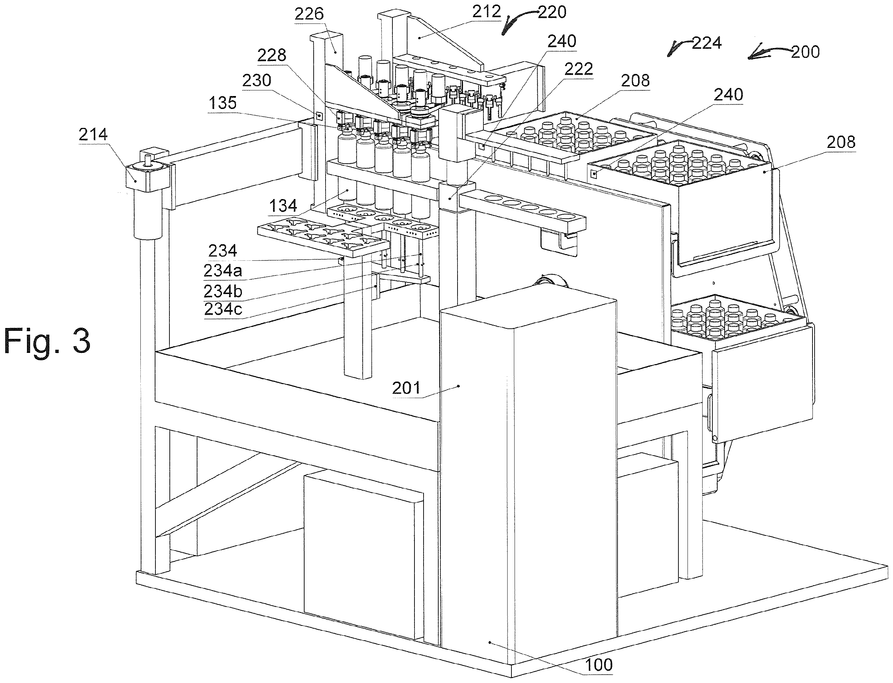

Thereafter, the first gantry has moved such that the beverage bottles 134 are positioned over the clamping device 222 in the handling region 220 and lowered bottle grippers 216, until the beverage bottles 134 are positioned in the clamping device 222. Thereafter, the first gantry 212 and a second gantry 226 have moved to a position in which at least one lid gripper 228 mounted on the second gantry 226 is positioned over a lid 135 of the beverage bottle 134 as is shown in figure 3. In the embodiment shown in the figures, a plurality of lid grippers 228 are mounted on the second gantry 226, namely five lid grippers 228.

A third drive 230 lowers the lid gripper 228 until the plurality of lid grippers 228 each grip one lid 135. Then, the lid grippers 228 remove the lids 135 from the beverage bottle 134, such as by unscrewing.

With reference to figure 3 the bottle filling apparatus 200 further comprises a bottle cleaning and drying device 234 having a plurality of cleaning pipes 234a with a stop 234b formed thereon. The bottle cleaning and drying device 234 is moved by a cleaning drive 234c vertically under control of the filler controller 201.

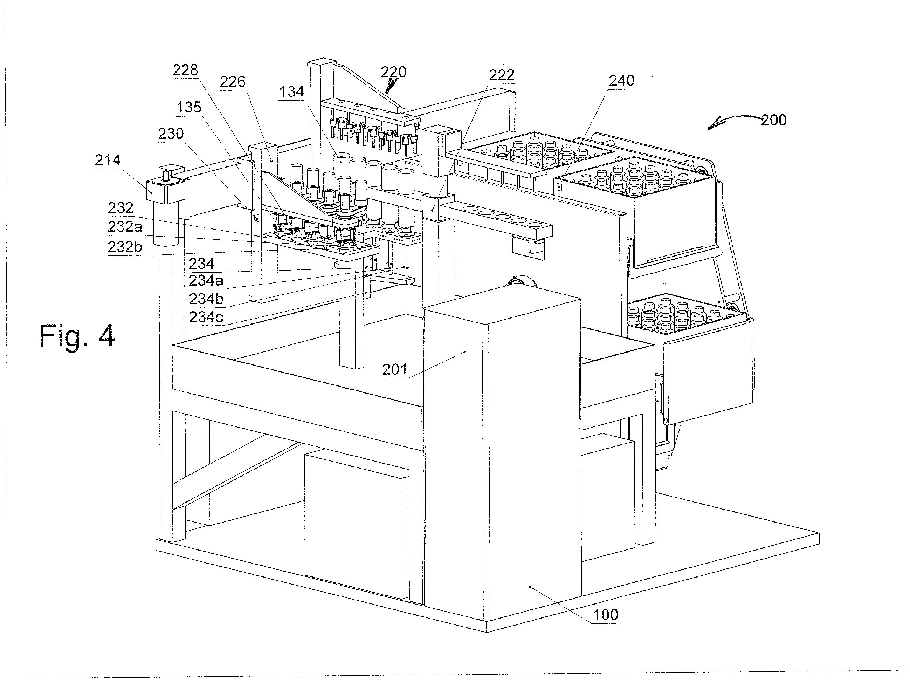

Reference is now made to figure 4 showing the further progress of the method according to the present invention. The second gantry 226 has moved the plurality of lid grippers 228 to a lid cleaning section 223a of a lid cleaning and drying device 232. Thereafter, the filler controller 201 instructs the third drive 230 to lower the lid grippers 228 until the lids 135 are positioned in the lid cleaning section 232a. After the lids are cleaned in the lid cleaning section 232a, the controller 201 instructs the lid cleaning and drying device 232 to dry the lids in the lid cleaning section 232a. The bottle cleaning and drying device 232 can clean the lids 135 by pressurized water and dry the lid by pressurized gas, as is described in the European patent application EP 23168779.9.

Further, the clamping device 222 has flipped the beverage bottles 134 in the handling region 222 of the bottle filling apparatus 200 upside down under control of the filler controller 201, such that the opening of the beverage bottles 134 are located downwards.

Figure 4 also shows that the filler controller 201 has instructed the cleaning drive 234c to lift the bottle cleaning and drying apparatus 234 such that the cleaning pipes 234a are positioned in the beverage bottles 134 until the stop 134 abuts at the opening of the respective beverage bottle 134.

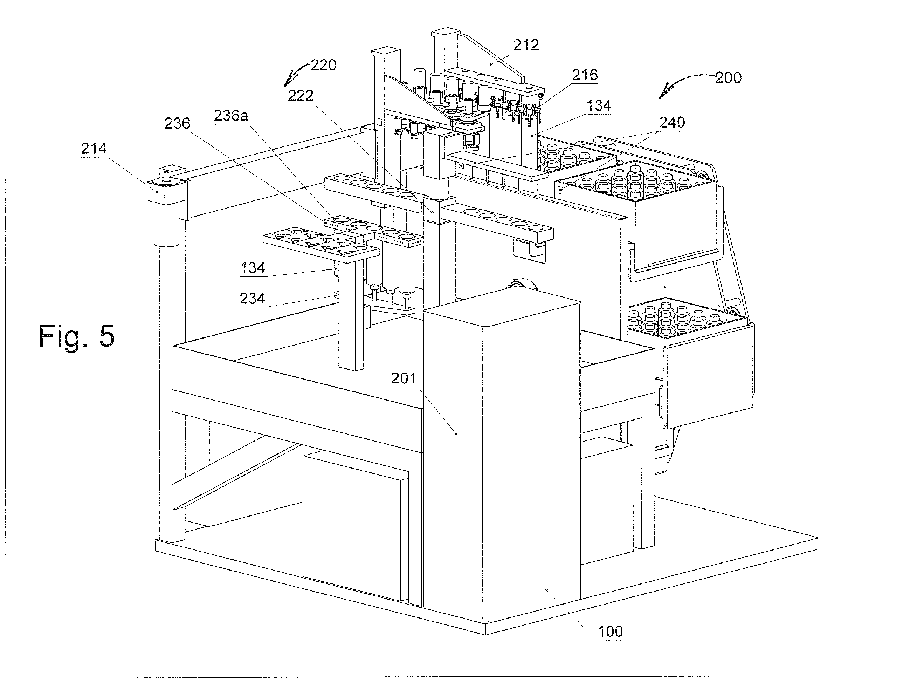

Reference is made to figure 5 for explaining method according to the present invention and the bottle filling apparatus 200 according to the present invention. The bottle cleaning and drying device 234 cleans the interior of the beverage bottles 134 by pressurized water ejected by the cleaning pipes 234a in its interior), for example as is described in the European patent application EP 23168779.9. The bottle cleaning and drying device 234 dries the beverage bottles 134 by pressurized air, for example as is described in the European patent application EP 23168779.9. The bottle cleaning and drying device 234 comprises a cleaning bar 236 comprising a plurality of openings 236a, in which a plurality of cleaning nozzles eject a cleaning fluid in the radial direction of the opening 236a. The exterior of the beverage bottles 134 is cleaned, when the beverage bottles 134 are lowered and dried, when the beverage bottles 134 are lifted under control of the filler controller 201 by the cleaning drive 234c of the bottle cleaning and drying apparatus 234.

Further, the controller 201 instructs the first drive 214 to move the first gantry 212 to a position above a plurality of beverage bottles 134 in the multiple bottle container 208, instructs the second drive 218 (see figure 2) to lower the bottle grippers 216, instructs the bottle grippers 216 to grip the plurality of beverage bottles 134 and instructs the second drive 218 to lift the bottle grippers 216 such that a second set of beverage bottles 134 is lifted above the multiple bottle container 208 during cleaning of a first set of a plurality of beverage bottles 134 by the cleaning and drying device 234.

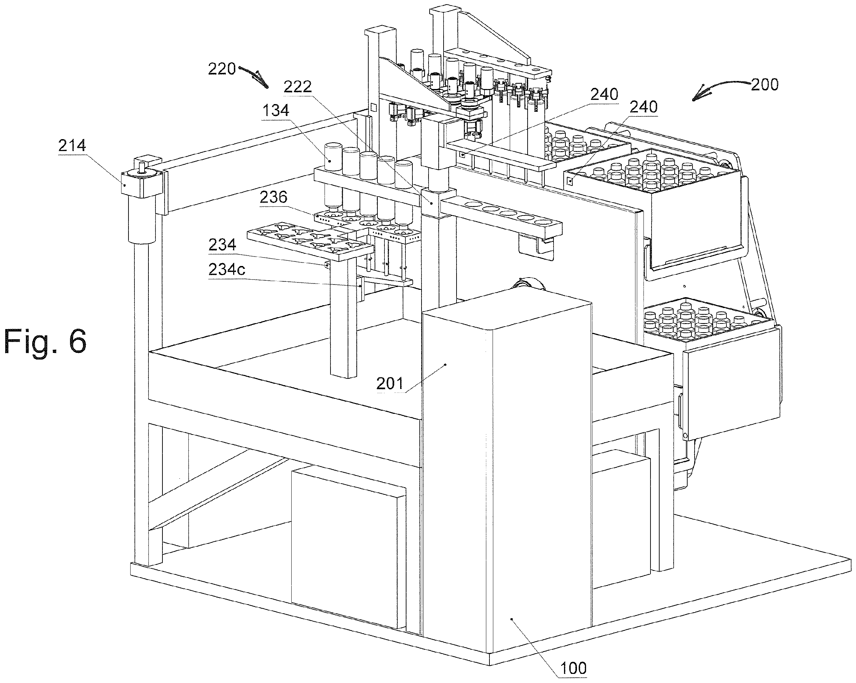

Reference is made to figure 6. After cleaning and drying the beverage bottles 134 the controller instructs the cleaning bar 236 to dry the beverage bottles 134 and the cleaning drive 234c of the cleaning and drying device 234 to lift the bottles into the handling region 220 of the clamping device 222, where the filler controller 201 instructs the clamping device 222 to clamp the beverage bottles in the handling region 220.

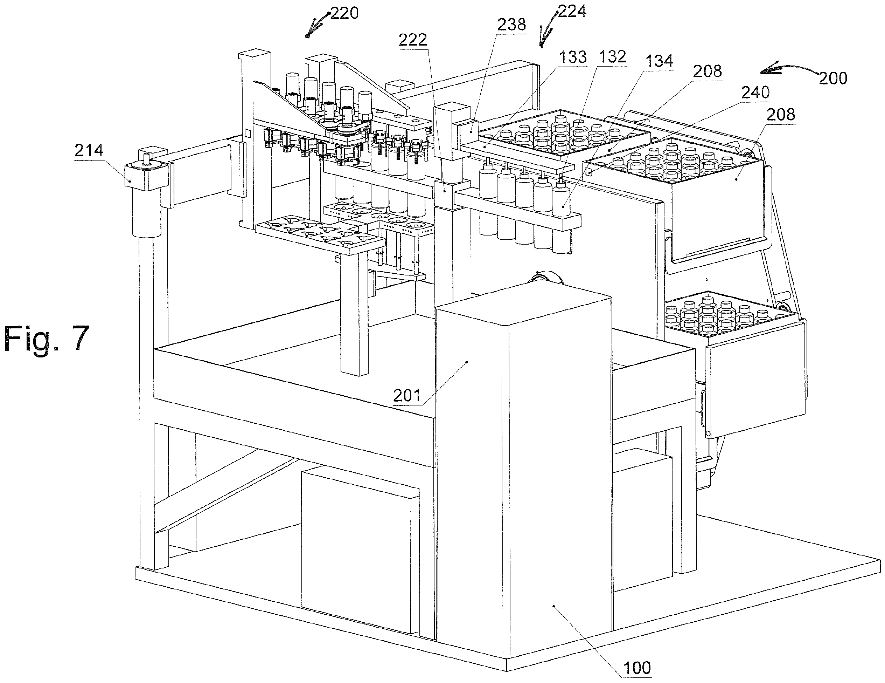

Reference is made to figure 7 showing the parallelized method for filling the plurality of beverage bottles 134 by the bottle filling apparatus 200 according to the present invention. The controller 201 has instructed the clamping device to flip the plurality of beverage bottles 134 such that the opening of the beverage bottles 134 are directed upwardly. Further, the controller 201 has instructed the clamping device 222 to swing the beverage bottles 134 located in the handling region 220 into the dispensing region 224 of the bottle filling apparatus 200.

Thereafter, the filler controller 201 instructs a dispensing drive 238 to lower a dispenser bar 133 comprising a plurality of nozzles 232, such that openings of the nozzle 132 are located in the beverage bottle. Further, filler controller 201 instructs an RFID reader 242 (see figure 2) to read a RFID tag 240 located on the multiple bottle container 208. The RFID tag 240 transmits the data indicating the desired recipe, which shall be used for preparing the beverage. The RFID reader 242 reads the recipe data received and transmits it to the filler controller 210. The filler controller 201 transmits a beverage recipe to the input interface 138 of the beverage dispensing device 100 (see figure 1). Thereafter, the beverage dispensing device 100 operates as has been described in context with figure 1.

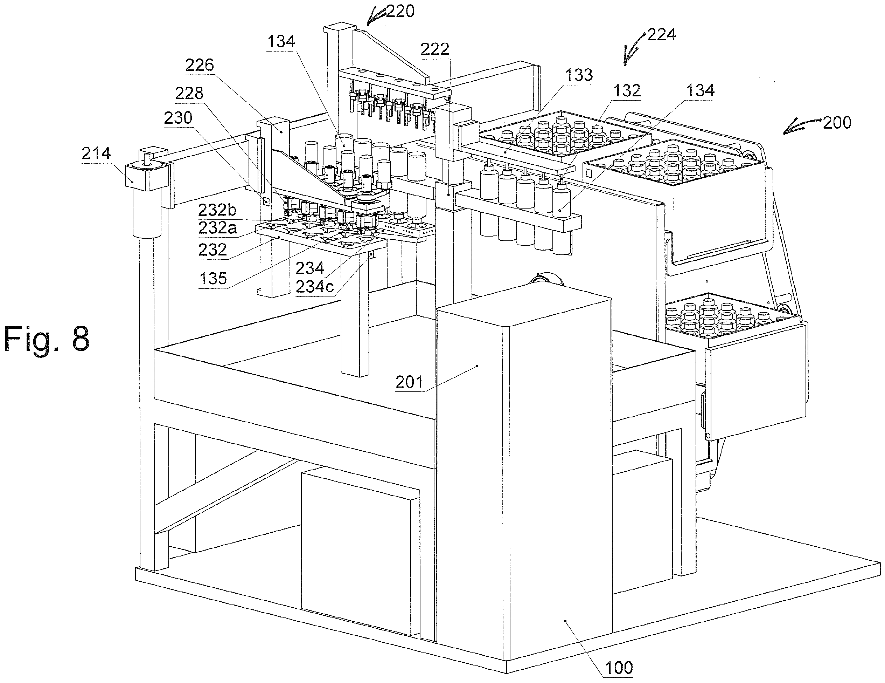

Reference is made to figure 8. The filler controller 201 has instructed the clamping device 222 to clamp the second set of beverage bottles 134 located in the handling region 220 and has instructed the cleaning drive 234 to lift the cleaning and drying device 234, until the stop 234b on the cleaning pipes 234a abuts the opening of the beverage bottles 134 that have been selected by the clamping device 222 under control of the filler controller 201 before lifting the cleaning and drying device 234. The first set of beverage bottles 134 located in the dispensing region 224 continues to be filled by the dispensing bar 133, the plurality of nozzles 132 by the beverage dispensing device 100 as described in relation to figure 1 under control by the dispenser controller 136 and the filler controller 201.

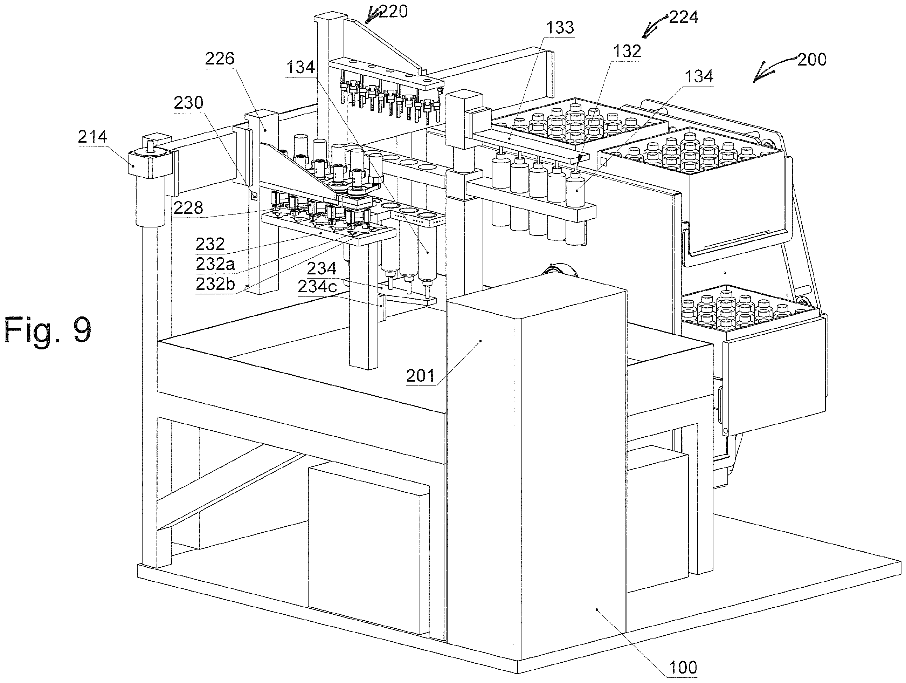

Reference is made to figure 9. The first set of the plurality of beverage bottles 134 continues to be filled by the dispensing bar 133 and the plurality of nozzles 132 by the dispensing device 100 under control of the dispenser controller 136 and the filler controller 201 as described in context with figure 1. The filler controller 201 instructs the cleaning drive 234c the to lower the second set of beverage bottles 134 and to clean and dry the second set of the plurality of the beverage bottles 134 by the cleaning and drying device 234 as described before under a reference to figure 5. Thereby, filling of the first set the plurality of beverage bottles 134 located in the dispensing region 224 is executed in parallel with cleaning and drying the second set of the plurality of beverage bottles 134 located in the handling section 220 of the bottle filling apparatus 200.

Figure 9 shows that the filler controller 201 has instructed the first drive 214 to position the second gantry 226 over the first lid cleaning region 232a of the lid drying and cleaning device 232. The filler controller 201 further instructs the third drive 230 to lower the lid grippers 228 and instructs the lid grippers 228 to each grip one lid 135. Thereby, the lids 135 of the first set of a beverage vessels 134 is griped by the plurality of lid grippers 228.

The vessel cleaning and drying device 234 and/or the lid cleaning and drying device 232 may be supplied by the beverage dispensing device 100 by permeate via the conduit 152.

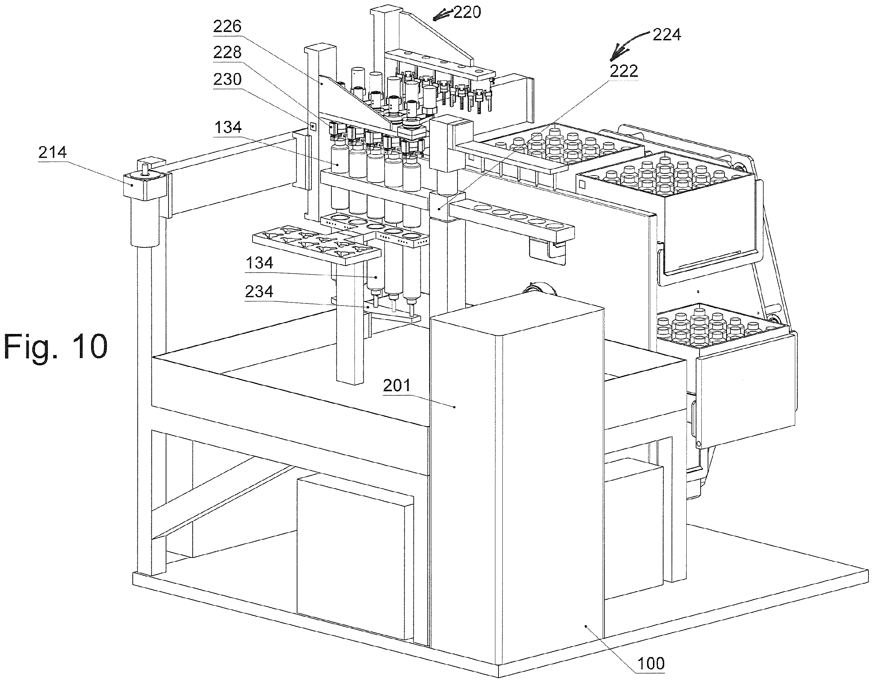

Reference is made to figure 10. The filler controller 201 has instructed the clamping device 222 to swing the first set of beverage vessels 134 from the dispensing region 224 to the handling region 220. Further, the filler controller 201 instructs the first drive to move the second gantry 226 over the clamping device in the handling region 220 and the second drive 230 to lower the plurality of vessel grippers 228 to the opening of the beverage vessel 134 and to fix the lids 135 on the beverage bottle 134.

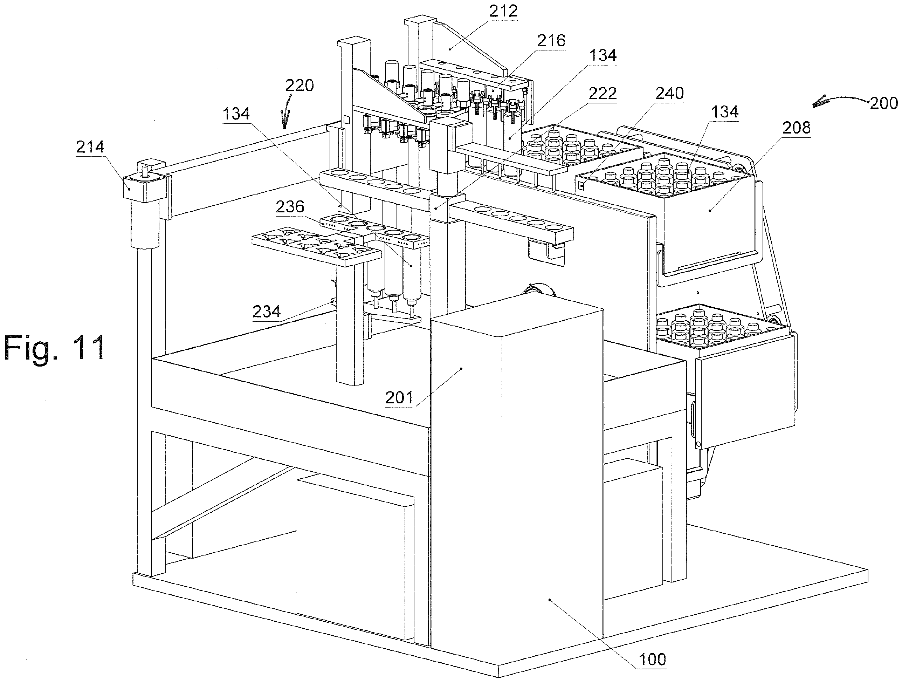

Figure 11 shows that the filler processor 201 has instructed the first drive 214 to position the first gantry 212 over the first set of beverage bottles 134 positioned in the handling region 220, to lower the bottle gripper vessel 216, to grip the beverage bottles 134 by the plurality of the bottle grippers 218, to lift the beverage bottles and instructs the first drive 214 to move the first gantry 212 over the position of the multiple bottle container 208, from which the first set of beverage bottles 134 has been removed. Thereafter, the filler controller 201 instructs the second drive 218 to lower the bottle gripper asked 216 such that the beverage vessels 134 are positioned in the multiple bottle container 208.

Thereafter, the method according to the present invention continues with the steps shown in figure 5.

It is to be understood, that any type of seal (not shown) can be applied on the lid and the bottle neck to show a user that the bottle has not been opened after filling.

After one multiple bottle container 208 is filled with beverage bottles 134 that are filled with the desired beverage, the rotatory lift device 202 moves the next support 206 and the corresponding multiple bottle container 208 to the position shown in figure 2 and the method and vessel controller 201 continue as described above. When all multiple bottle containers 208 are filled with beverage bottles 134 comprising the respective desired beverage, the rotatory lift device 202 moves the multi bottle beverage containers 208 to the next position, wherein the next multiple beverage container 208 is in a position, in which the beverage bottles of the next multi beverage bottle can be cleaned and filled. Finally, the beverage container is moved to an exit flap (not shown), which is opened by the filler controller 208 and the filled multiple bottle container 208 can be removed from the respective support 206.

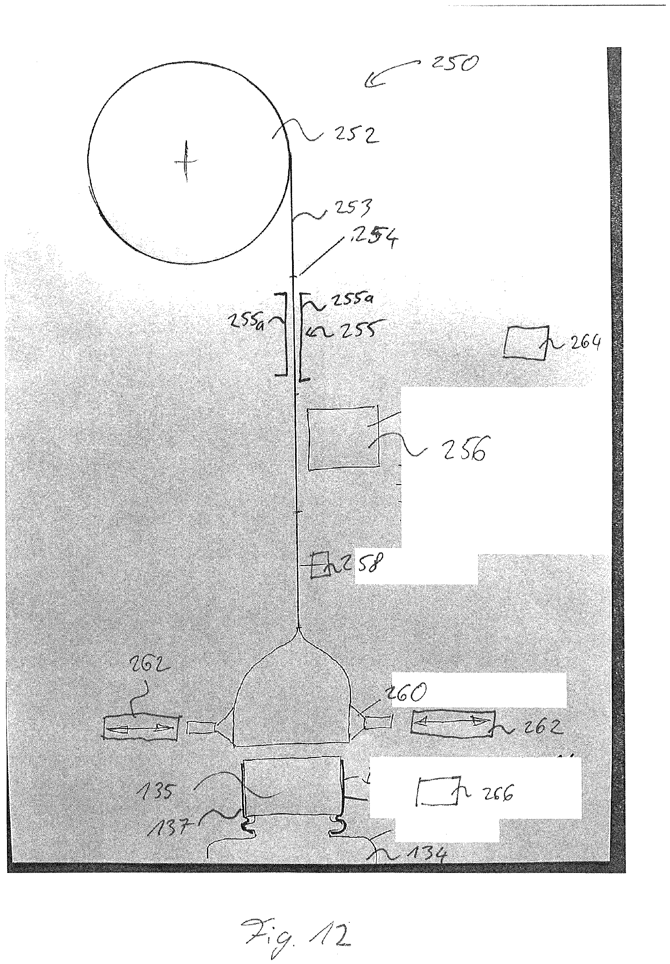

In one embodiment a sealing device 250 may be arranged after the exit flap of the bottle filling apparatus 200. Reference is made to Fig. 12 showing the sealing device 250. The sealing device 250 may comprise a roll 252, on which seals 253 are arranged consecutively and separated by perforations 254. The sealer controller 264 receives at least one beverage recipe from the filler controller 201. A clamp feeder 255 comprising two releasable clamps 255a unrolls the seals 253 from the roll 252 and feeds the seals 253 to a printer 256 under control of a sealer controller 264.

The printer 256 prints graphical data under control of the sealer controller 264 on the seal 253. The graphical date may indicate the carbonization, aroma and/or mineralization of the beverage filled into the beverage bottle 134 and/or an expiration date. During printing the graphical information the seal 253 is moved in its longitudinal direction and a printing head of the printer is moved orthogonal to the longitudinal direction of the seal 253. The seal 253 may be made of PTFE (polytetrafluorethylene), PVDF (polyvinylidene fluoride) or a similar appropriate material. The seal may be a shrink film, particularly a tubular shrink film.

A dryer 258 dries ink applied to the seal 153 by the printing head. Vacuum nozzles 260 driven by nozzle actors under control of the sealer controller 264 stretch the seal such that it can be positioned over the neck of the bottle 134 and the lid 135, such that the neck and lid 135 are at least partially covered.

A heater 266 applies heat on the seal under control of the sealer controller 264 such that the seal 137 is shrinked on the lid 135 and neck of the bottle 134.

It is to be understood that the filler controller 201, the dispenser controller 136 and the sealer controller 264 may be embodied by a single or multiple computing devices.

The present invention has the advantage that beverage bottles can be filled very close to the point of use with a beverage recipe requested by a user. Thereby, transport of glass bottles over a large distance can be avoided. Further, the environmental impact of discarded plastic bottles can be avoided. Finally, it is possible to satisfy a beverage demand of user within a short time span.

## Claims

1. A method of filling a beverage into a plurality of beverage bottles, comprising the following steps:
- assessing at least one property of one multiple bottle container of the first group of multiple bottle containers configured that a plurality of beverage bottles may be positioned in each multiple bottle container, wherein the at least one property of the first beverage container corresponds to a first beverage recipe; and
- filling a first beverage type depending on the at least one property of the multiple bottle container into at least one beverage bottle that is positioned in the multiple bottle container after filling the at least one beverage bottle, wherein the first beverage type is made by the first beverage recipe.

2. The method according to claim 1, further comprising the following steps:
- assessing at least one property of one multiple bottle container of the second group of multiple bottle containers configured that a plurality of beverage bottles may be positioned in each multiple bottle container, wherein the at least one property of the beverage container corresponds to a second beverage recipe; and
- filling a second beverage type depending on the at least one property of one multiple bottle container of the second group of multiple bottle containers into at least one beverage bottle that is positioned in the multiple beverage container after filling the at least one beverage bottle, wherein the second beverage type is made by the second beverage recipe.

3. The method according to claim 1 or 2, wherein the step of assessing at least one property of the multiple bottle container comprises the step of
- reading a RFID tag positioned on the multiple bottle container, wherein the RFID tag comprises a memory and wherein the memory comprises data associated to the beverage recipe to be used for producing the beverage that is to be filled in the beverage bottle that is placed into the multiple bottle container.

4. The method according to any one of claims 1 to 3, further comprising the following step:
- removing at least one beverage bottle from the multiple bottle container; executing the following step before the step of filling the first beverage type or second beverage type depending on the at least one property of the multiple bottle container into the at least one beverage bottle that was removed from the multiple bottle container;
- cleaning the interior of the at least one beverage bottle removed from the multiple bottle container;
executing the following step after the step of filling the first beverage type or second depending on the at least one property of the multiple bottle container into the at least one beverage bottle that was removed from the multiple bottle container:
- positioning the at least one beverage bottle filled with the beverage into the multiple bottle container.

5. The method according to claim 4, wherein the step of positioning the at least one beverage bottle filled with the beverage into a multiple bottle container includes the step of:
- positioning the at least one beverage bottle in the multiple beverage container, from which it was removed by the step of removing at least one beverage bottle from the multiple bottle container.

6. A bottle filling apparatus adapted to fill a beverage bottle that is to be positioned in one multiple bottle container of the first group of multiple bottle containers configured that a plurality of beverage bottles may be positioned in each multiple bottle container, wherein the bottle filling apparatus comprises
- a beverage dispensing device adapted to output a plurality of different beverage types from a nozzle into a beverage bottle that is to be positioned in the multiple bottle container;
- a bottle handling device adapted to position the beverage bottle at the nozzle of the beverage dispensing device and to position the beverage bottle in the multiple bottle container; and
- a filler controller adapted
- to receive data indicative of a first beverage recipe;
- to instruct the beverage dispensing device to output a first beverage type into the beverage bottle, wherein the first beverage type is made according to the first beverage recipe; and
- to instruct the bottle handling device to position the at least one beverage bottle in one multiple bottle container of the first group of multiple bottle containers.

7. The bottle filling apparatus according to claim 6, wherein the filler controller is further adapted to:
- to receive data indicative of a second beverage recipe;
- to instruct the beverage dispensing device to output a second beverage type into the beverage bottle, wherein the second beverage type is made according to the second beverage recipe; and
- to instruct the bottle handling device to position the at least one beverage bottle in the one multiple bottle container of the second group of multiple bottle containers.

8. The according to claim 6 or 7, wherein the bottle filling apparatus further comprises
- a scanning device adapted to assess at least one property of the multiple bottle container, wherein the at least on property of the beverage container corresponds to the first beverage recipe or to the second beverage recipe;
- wherein the filler controller is adapted to
- to instruct the scanning device to assess the at least one property of a one multiple bottle container of the first group of multiple bottle containers and to transmit data indicative of the first beverage recipe to the filler controller; and/or
- to instruct the scanning device to assess the at least one property of one multiple bottle container of the second group of multiple bottle containers and to transmit data indicative of the second beverage recipe to the filler controller.

9. The bottle filling apparatus according to any one of claims 6 to 8, wherein the bottle filling apparatus further comprises
- a bottle cleaning device adapted to clean at least the interior of at least one beverage bottle;
- wherein the filler controller is adapted
- to instruct the bottle handling device to remove at least one beverage bottle from the multiple bottle container and to position the at least one beverage bottle such at the bottle cleaning device that it can be cleaned by the bottle cleaning device;
- thereafter to instruct the bottle cleaning device to clean at least the interior of the at least one beverage bottle;
- thereafter to instruct the bottle handling device to move the at least one beverage bottle to the beverage dispensing device; and
- thereafter to instruct the beverage dispensing device to output a first beverage type or second beverage type into the at least one beverage bottle.

10. A bottle filling apparatus adapted to fill a beverage bottle that is to be positioned in one multiple bottle container of a first group of multiple bottle containers configured that a plurality of beverage bottles may be positioned in each multiple bottle container, wherein the bottle filling apparatus comprises
- a beverage dispensing device adapted to output at least one beverage type from a nozzle into a beverage bottle that is to be positioned in one multiple bottle container of the first group of multiple bottle containers;
- a bottle cleaning device adapted to clean at least the interior of at least one beverage bottle;
- a bottle handling device adapted to position the beverage bottle at the nozzle of the beverage dispensing device and to position the beverage bottle in the multiple bottle container; and
- a filler controller adapted
- to instruct the bottle handling device to remove at least one beverage bottle from one multiple bottle container of the first group of multiple bottle containers and to position the at least one beverage bottle such at the bottle cleaning device that the bottle cleaning device can clean the at least one beverage bottle;
- thereafter to instruct the bottle cleaning device to clean at least the interior of the at least one beverage bottle;
- thereafter to instruct the bottle handling device to move the at least one beverage bottle to the beverage dispensing device;
- to instruct the beverage dispensing device to output the at least one beverage type into the beverage bottle, wherein the first beverage type is made according to the first beverage recipe; and
- to instruct the bottle handling device to position the at least one beverage bottle in one multiple bottle container of the first group of multiple bottle containers.

11. The bottle filling apparatus according to any one claims 6 to 10, further comprising
- a lid cleaning device adapted to clean a lid that has been removed from the beverage bottle before cleaning one of the beverage bottles and that is fixed on one of the beverage bottles after filling the beverage bottle.

12. The bottle filling apparatus according to any one of claims 6 to 11, wherein the bottle handling device comprises:
- a fist gantry having at least one beverage bottle gripper configured to grip one of the beverage bottles; and
- a second gantry mechanically coupled to the first gantry and having at least one lid gripper configured to grip a lid of one of the beverage bottles.

13. The bottle filling apparatus according to claim 12, wherein the first gantry and second gantry are connected to a first drive and moved synchronically;
- wherein the filler controller is adapted to instruct the first drive to move the first gantry to a position, in which the bottle gripper is located over one beverage bottle in the multiple beverage container, to instruct a second drive to lower the bottle gripper, to instruct the bottle gripper to grip one of the beverage bottles, to instruct the second drive to lift the bottle gripper, to instruct the first drive to move the at least one beverage bottle to portion of a clamping device located in a handling region of the bottle filling apparatus and to instruct the clamping device to clamp the at least one beverage bottle located in the handling region of the bottle filling apparatus; and
- wherein the filler controller is further adapted to instruct the first drive coupled to the second gantry to position lid gripper over the at least one beverage bottle clamped by the clamping device and located in the handling region of the bottle filling apparatus, to instruct a third drive to lower the lid gripper to the lid of the at least one beverage bottle clamped by the clamping device and located in the handling region of the bottle filling apparatus, to instruct the lid gripper to remove the lid from the at least one beverage bottle clamped by the clamping device and located in the handling region of the bottle filling apparatus, to instruct the third drive to lift the lid gripper and to instruct the first drive to position the lid gripper over the lid cleaning device.

14. The bottle filling apparatus according to claim 13, wherein the bottle handling device comprises
- a flip device adapted to flip the portion of the clamping device located in the handling region;
- wherein the filler controller is adapted to instruct the flip device to flip the clamping device and the at least one beverage bottle clamped therein in the handling region of the bottle filling apparatus such that the opening of the at least one beverage bottle is directed downwards; and
- wherein the filler controller is adapted to instruct the bottle cleaning device to clean at least the interior of the at least one beverage bottle.

15. The bottle filling apparatus according to claim 14, wherein the bottle handling device comprises a swing device adapted to swing the portion of the clamping device located in the handling region of bottle filling apparatus to the dispensing region of bottle filling apparatus, in which the opening of the at least one beverage bottle clamped by the clamping device is positioned below the nozzle of the beverage dispensing device;
- wherein the filler controller is adapted to instruct the swing device to swing the portion of the clamping device located in the handling region to the dispensing region, in which the opening of the at least one beverage bottle clamped by the clamping device is positioned below the nozzle of the beverage dispensing device; and
- thereafter to instruct the beverage dispensing device to output a first beverage type or a second beverage type into the beverage bottle.

16. The bottle filling apparatus according to claim 15, wherein the filler controller is adapted to:
- to instruct the bottle cleaning device to clean at least the interior of at least one beverage bottle that was removed by the bottle gripper of the first gantry form the multiple bottle container after the at least one beverage bottle that is filled by the by the beverage dispensing device.

17. The bottle filling apparatus according to claim 10 and according to any one of claims 11 to 16, if depending from claim 10, further comprising:
- a scanning device adapted to assess at least one property of the multiple bottle container, wherein the at least on property of the beverage container corresponds to a first beverage recipe or a second beverage recipe;
- wherein the filler controller is adapted to
- to instruct the scanning device to assess the at least one property of one multiple bottle container of the first group of multiple bottle containers and to transmit data indicative of the first beverage recipe to the filler controller; and/or
- to instruct the scanning device to assess the at least one property of one multiple bottle container of the second group of multiple bottle containers and to transmit data indicative of the second beverage recipe to the filler controller.

18. The bottle filling apparatus according to any one of claims 6 to 17, wherein the beverage dispensing device comprises:
- a filter having an inlet connected to a source of aqueous liquid and a filter outlet; and at least one of a
- a carbonizing device having an inlet coupled with the filter outlet and an outlet coupled with the nozzle; and
- a mineralization device having an inlet coupled with the filter outlet and an outlet coupled with the nozzle; and
- an aroma dispensing device having an inlet coupled with the filter outlet and an outlet coupled with the nozzle;
- wherein the filler controller is adapted to control operation of at least one of the carbonizing device and the mineralization device and the aroma dispensing device according to the first beverage recipe or the second beverage recipe.

19. The bottle filling apparatus according to any one of claims 6 to 18, further comprising
- a sealing device, including:
- a printing device adapted to print data representing the first beverage recipe or the second beverage recipe filled into the beverage bottle on a seal;
- a seal handling device adapted to position the seal at least partially around a neck of the beverage bottle and at least partially around the lid positioned on the bottle mouth; and
- a heating device adapted to heat the seal positioned at least partially around the neck of the bottle and at least partially around the lid positioned on the bottle mouth;
- wherein the filler controller is adapted to control the printing device such it prints graphical data on the seal depending on the first beverage recipe or the second beverage recipe.

20. A multiple bottle container configured that a plurality of beverage bottles may be positioned therein, comprising:
- a container casing having a plurality of guides, wherein each guide is configured to accommodate at least one beverage bottle;
- a container RF receiver adapted to receive a radio signal;
- a container memory, in which beverage recipe data is stored that is associated to a beverage recipe that defines, which type of beverage is filled or is to be filled into a beverage bottle positioned or to be positioned in a guide of the multiple bottle container;
- a container RF transmitter adapted to transmit a radio signal; and
- a container controller adapted to read the beverage recipe data from the memory, if the container RF receiver receives a radio signal requesting to transmit the beverage recipe data and adapted to instruct the container RF transmitter to transmit the beverage recipe data.
